# EUROPÄISCHE PATENTANMELDUNG

(11) **EP 0 706 289 A1**
(43) Veröffentlichungstag der Anmeldung: **10.04.1996**
(21) Anmeldenummer: 95115786.6
(22) Anmeldetag: 06.10.1995
(51) Int. Cl.: H04N 5/65

(54) **Blendschutzvorrichtung für Bildschirme**

(30) Priorität: 06.10.1994 DE 9416117 U
(71) Anmelder: Rathje, Gisela, D-22299 Hamburg (DE)
(72) Erfinder: Rathje, Gisela, D-22299 Hamburg (DE)
(74) Vertreter: Farago, Peter Andreas

(57) **Zusammenfassung**

Die Erfindung betrifft eine Blendschutzvorrichtung für Bildschirme, wobei die Blendschutzvorrichtung mindestens zwei Teilabschnitte (3, 3', 3'', 4, 4', 4'') umfaßt, wobei mindestens einer der Teilabschnitte (3, 3', 3'') eine Blendschutzwand bildet, dadurch gekennzeichnet, daß der die Blendschutzwand bildende Teilabschnitt (3, 3', 3'') aus einem flexiblen flächigen Bahnmaterial ausgeführt ist, und daß mindestens ein weiterer Teilabschnitt (4, 4', 4'') aus einem elastisch dehnbaren Material ausgeführt ist, so daß die Teilabschnitte einen geschlossenen Ring einstellbarer Größe bilden.

## Beschreibung

Die vorliegende Erfindung betrifft eine Blendschutzvorrichtung für Bildschirme, insbesondere zur Verwendung an mit Datensichtgeräten ausgestatteten Arbeitsplätzen.

Bildschirme von Fernsehern oder Computermonitoren stehen oft in Räumen, in denen der Gesamtlichteinfall aufgrund einer Tageslichtkomponente in seiner Richtung und seinem Ausmaß im wesentlichen veränderlich ist. Als Folge dessen, ist es nur schwer möglich, den Bildschirm so aufzustellen, daß störende Reflexionen von Streustrahlung an der Bildschirmoberfläche gänzlich vermieden werden. Derartige Reflexionen vermindern die Lesbarkeit der auf dem Bildschirm dargestellten Informationen, was für das Auge des Beobachters eine erhebliche Belastung darstellt, die sich zu der systemimmanenten Strahlungsbelastung durch vom Bildschirm emittierte kurzwellige Strahlung addiert. Bekanntlich treten infolgedessen in jüngster Zeit Kopfschmerzen und/oder Sehstörungen bei den Inhabern von Bildschirmarbeitsplätzen vermehrt als Berufskrankheit auf.

Desweiteren führen die Reflexionen an den Bildschirmen auch zu einer subjektiven Verfälschung der am Bildschirm dargestellten Farben. Dies führt dazu, daß speziell bei graphischen Anwendungen der Benutzer zeit- und kostenaufwendige farbige Probeausdrucke erstellen muß, um das Gesamterscheinungsbild seiner Arbeit zu überprüfen.

Das Anbringen von Blenden am Bildschirm zur Vermeidung von Reflexionen ist an sich bekannt. So offenbart GM 78 36 663 eine starre Abschirmblende, die an einem zweckmäßig ausgestalteten Bildschirmwulst anbringbar ist. GM 93 01 322 offenbart einen Blendschutz, bei dem die Blenden schwenkbar an einer Halteeinrichtung angebracht sind. Die bekannten Lösungen haben jedoch den Nachteil, daß die Möglichkeit der Anpassung an verschiedene Bildschirmformate nur mit technisch aufwendigen Justiereinrichtungen erreicht wird. Die in GM 90 16 923 gezeigte Lösung einer manschettenartigen Blende mit gelenkigen Eckbereichen und überlappendem Verschluß hat den Nachteil, daß, um eine wirklich paßgenaue Einstellung an das jeweilige Bildschirmformat zu bewirken, jeder der vier Abschnitte der Blende in der Länge variabel sein muß, was die Anbringung der Blende erschwert.

Aufgabe der vorliegenden Erfindung ist es daher, einen Blendschutz für Bildschirme zur Verfügung zu stellen, der an beliebig geformten Bildschirmgehäusen verschiedenster Größen schnell und einfach anzubringen ist, ohne daß sein Aussehen durch aufwendige Justiervorrichtungen beeinträchtigt wird.

Eine weitere Aufgabe der Erfindung ist es, einen Blendschutz für Bildschirme mit glatten Außenflächen zur Verfügung zu stellen, bei dem die durch die Bildschirmecken vorgegebene Kantenbildung an beliebigen Stellen erfolgen kann.

Eine weitere Aufgabe der Erfindung ist es, einen Blendschutz für Bildschirme zur Verfügung zu stellen, bei dem die fortlaufende Symmetrie eines auf seinen Außenflächen angebrachten Musters durch die Anpassung an die jeweilige Bildschirmgröße nicht ästhetisch nachteilig beeinträchtigt wird.

Diese und andere Aufgaben werden durch die Blendschutzvorrichtung für Bildschirme gemäß den anliegenden Ansprüchen gelöst.

Weitere Eigenschaften und Vorteile gehen deutlicher aus der detaillierten Beschreibung bevorzugter Ausführungsformen der Vorrichtung gemäß der vorliegenden Erfindung hervor, welche beispielhaft in den beigefügten Zeichnungen dargestellt sind, wobei
Fig. 1 eine perspektivische Gesamtansicht einer ersten Ausführungsform der Blendschutzvorrichtung gemäß der vorliegenden Erfindung beim Zusammenfügen der Einzelteile zu einem geschlossenen Ring zeigt,
Fig. 2 eine Gesamtansicht der ersten Ausführungsform der Blendschutzvorrichtung gemäß der vorliegenden Erfindung zeigt, bei der die beiden Halbteile der Blendschutzvorrichtung voneinander getrennt sind,
Fig. 3 eine Ansicht der ersten Ausführungsform der Blendschutzvorrichtung gemäß der vorliegenden Erfindung zeigt, wenn sie auf den Bildschirm aufgezogen ist,
Fig. 4 eine perspektivische Gesamtansicht einer zweiten Ausführungsform der Blendschutzvorrichtung gemäß der vorliegenden Erfindung zeigt,
Fig. 5 eine Ansicht der zweiten Ausführungsform der Blendschutzvorrichtung gemäß der vorliegenden Erfindung zeigt, wenn sie auf den Bildschirm aufgezogen ist.

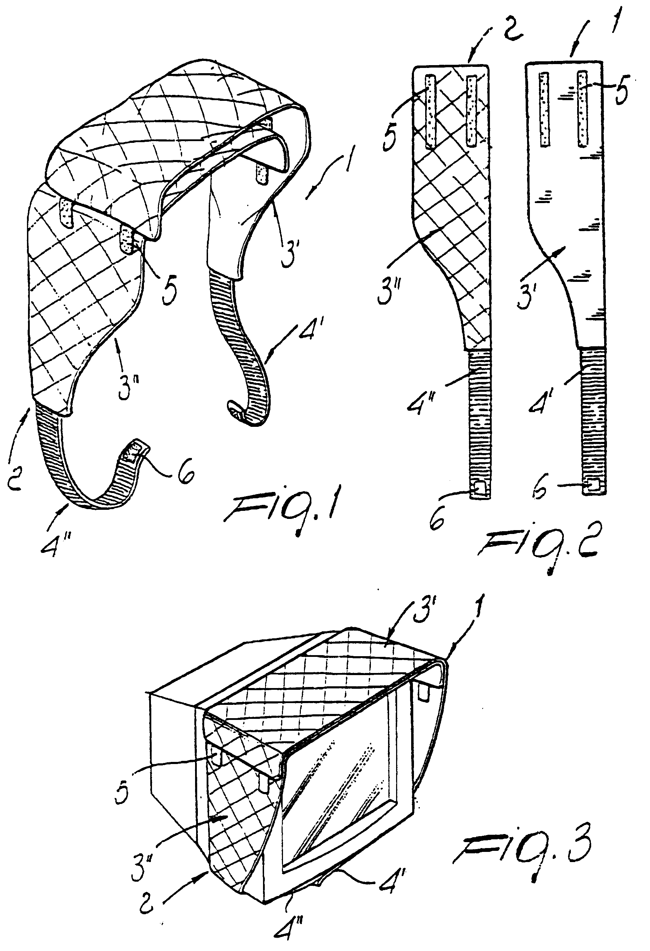

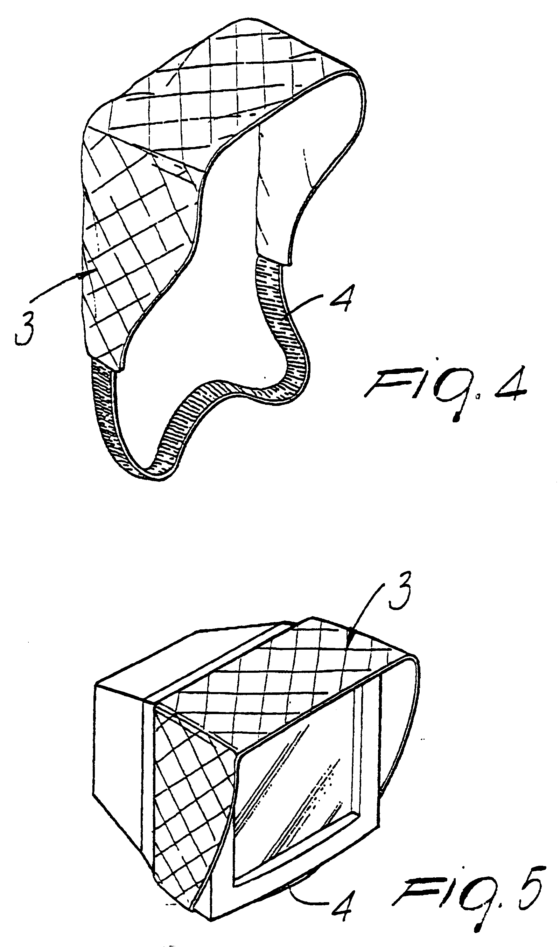

Unter Bezugnahme auf die Figuren 1 und 2 wird eine erste bevorzugte Ausführungsform der Blendschutzvorrichtung erläutert. Die Blendschutzvorrichtung umfaßt zwei Halbteile 1 und 2, die jeweils aus zwei Teilabschnitten 3'-4' und 3''-4'' bestehen. Die Teilabschnitte 3'-4' und 3''-4'' der Blendschutzhalbteile sind bevorzugt aus einem flexiblen und/oder elastisch dehnbaren Material herstellbar. Als geeignetes Material für die Teilabschnitte 3' und 3'' hat sich ein flächiges Kunststoffbahnmaterial erwiesen. Mindestens der Teilabschnitt 3' des Halbteils 1 und Teilabschnitt 3'' des Halbteils 2 sind als Blendschutzwand ausgebildet, wobei im geschlossenen Zusatand die Teilabschnitte 3'und 3'' zusammen ein Trapez bilden.

Eine Schließvorrichtung zum Verbinden der Teilabschnitte 3' und 3'' trägt das Bezugszeichen 5, und eine Schließvorrichtung zum Verbinden der Teilabschnitte 4' und 4'' trägt das Bezugszeichen 6. Dabei ist es für weitere (hier nicht dargestellte) Ausführungsformen der Erfindung denkbar, daß jeweils nur eine Schließvorrichtung an einem Teilabschnittspaar vorgesehen wird, wobei dann entsprechend das andere Teilabschnittspaar einteilig ausgebildet ist. Es ist weiterhin vorstellbar, daß eine oder mehrere Schließvorrichtungen an weiteren, beliebigen Stellen der Blendschutzvorrichtung (z.B. seitlich) vorgesehen werden.

Die äußere Seite der Teilabschnitte 3' und 3'' kann vorteilhafterweise mit einem farbigen, auch großflächigen Muster bedruckt oder einer Prägung versehen sein, die beispielsweise dem Gesamterscheinungsbild der restlichen Büroeinrichtung stilistisch vorteilhaft angepaßt ist. Die innere Seite der Teilabschnitte 3'-3'' ist vorteilhafterweise von matter und lichtdämpfender Farbe, was zur Absorbtion des auf die Blendeninnenkante fallenden Lichts führt und damit die Reflexion von Streustrahlung auf die Bildschirmfläche und von dort aus in das Auge des Beobachters vermeidet.

Eine Weiterbildung der Erfindung besteht darin, daß die Teilabschnitte 3' und 3'' aus einem Bahnmaterial geeignet gewählter Flexibilität und/oder Elastizität, wie z.B. einem Kunststoff ausgeführt werden, derart, daß sich das Bahnmaterial ohne abzuknicken, um die Bildschirmecken zu legen vermag, wobei es aber auch gleichzeitig an der Bildschirmoberkante nicht merklich durchhängt. Diese Weiterbildung der Teilabschnitte 3' und 3'' gewährleistet als einen weiteren Vorteil das zwischenraumfreie oder bündige Anliegen der an den Bildschirmecken entstehenden Kanten der Blendschutzvorrichtung. Desweiteren gestattet die obige Weiterbildung der Teilabschnitte 3' und 3'', daß die an den Bildschirmecken entstehenden Kanten ohne zusätzliche Gelenke oder balgartig ausgebildeten Knickstellen hergestellt werden, was wiederum die Anbringung von großfächigen Mustern erleichtert.

Die Teilabschnitte 4' und 4'' der Halbteile 1 und 2 der Blendschutzvorrichtung gemäß der vorliegenden Erfindung können aus einem flexiblen und/oder elastisch dehnbaren Bahnmaterial hergestellt werden. Dabei wird in Verbindung mit den Teilabschnitten 3' und 3'' der o.a. Weiterbildung eine besonders gute Anpassung an die Bildschirmecken erreicht. Die genaue Anpassung and die Bildschirmgröße erfolgt entweder über die Elastizität der Teilabschnitte oder über verstellbare Schließvorrichtungen die nachstehend beschrieben werden. Es ist auch denkbar, daß die genaue Anpassung sowohl über die Elastizität der Teilabschnitte als auch mittels den verstellbare Schließvorrichtungen erfolgt.

Die obere Schließvorrichtung 5 zum Verbinden der Teilabschnitte 3' und 3'' der Halbteile 1 und 2 ist vorzugsweise stufenlos verstellbar, wie das in den Figuren 1 und 2 beispielhaft durch einen Klettverschluß angedeutet ist, aber sie kann auch stufig verstellbar ausgeführt sein, wie beispielsweise mittels auf den Halbteilen 1 und 2 angebrachten Druckknöpfen.

Die Anpassung der Blendschutzvorrichtung an die Bildschirmform und -größe kann auch durch die elastischen Eigenschaften der Teilabschnitte erreicht werden.

Die untere Schließvorrichtung 6 zum Verbinden der Teilabschnitte 4' und 4'' der Halbteile 1 und 2 ist vorzugsweise, aber nicht zwingend, stufenlos verstellbar und kann beispielsweise wie in den Figuren 1 und 2 als Klettverschluß ausgebildet sein.

Wie in Fig. 3 dargestellt, sorgt das Zusammenwirken der beiden Schließvorrichtungen 5 und 6, beim Zusammenfügen der Halbteile 1 und 2 zu einem geschlossenen Ring, im Einklang mit der elastischen Dehnbarkeit der Teilabschnitte 3'-3'' und/oder 4'-4'' dafür, daß die Blendschutzvorrichtung gemäß der vorliegenden Erfindung an Bildschirme beliebiger Größe angepaßt werden kann, wobei gewährleistet ist, daß die Teilabschnitte 4'-4'' in aufgezogenem Zustand im wesentlichen auf der Bildschirmunterkante anliegen und gleichzeitig an der Bildschirmoberkante am Ort der Schließvorrichtung 5 trotz partieller Überlappung oder trotz Zusammenstoßens der Teilabschnitte 3' und 3'' keine Störung des auf der Außenseite der Teilabschnitte 3' und 3'' aufgebrachten auch großflächigen Musters entsteht.

Unter Bezugnahme auf die Figuren 4 und 5 wird die zweite bevorzugte Ausführungsform der Blendschutzvorrichtung für Bildschirme gemäß vorliegender Erfindung erläutert. Wie in den Figuren 4 und 5 dargestellt, besteht sie aus einem geschlossenen Ring mit einem flexiblen Teilabschnitt 3 und einem flexiblen und elastischen Teilabschnitt 4. Der flexiblen Teilabschnitt 3 ist aus einem flächigen Bahnmaterial gebildet, wie in der ersten Ausführungsform beschrieben.

Der Teilabschnitt 4 des geschlossenen Rings besteht aus einem flexiblen und/oder elastisch dehnbaren Bahnmaterial, dessen maximale Ausdehnung ein Vielfaches seiner Ruhelänge beträgt. Dadurch ist gewährleistet, daß der Teilabschnitt 4 in auf dem Bildschirm aufgezogenem Zustand im wesentlichen auf der Bildschirmunterkante liegt.

In allen Ausführungsformen der Blendschutzvorrichtung gemäß vorliegender Erfindung ist die Blendenwirkung der Teilabschnitte 3' und 3'' in aufgezogenem Zustand je nach Lichteinfall durch einfaches Vor- und Zurückschieben regulierbar.

Die Erfindung kann in vielerlei Hinsicht abgeändert werden, ohne dadurch ihren Rahmen zu überschreiten. Alle konstruktiven Teile können durch andere technisch äquivalente Teile ersetzt werden und die angewendeten Materialien, Abmessungen und Formen können beliebig neu gewählt werden.

Wenn technische Merkmale in den Ansprüchen mit Bezugszeichen versehen sind, so sind diese Bezugszeichen lediglich zum besseren Verständnis der Ansprüche vorhanden. Dementsprechend stellen solche Bezugszeichen keine Einschränkungen des Umfangs solcher Elemente dar, die beispielsweise durch solche Bezugszeichen gekennzeichnet sind.

## Patentansprüche

1. Blendschutzvorrichtung für Bildschirme, wobei die Blendschutzvorrichtung mindestens zwei Teilabschnitte (3, 3', 3'', 4, 4', 4'') umfaßt, wobei mindestens einer der Teilabschnitte (3, 3', 3'') eine Blendschutzwand bildet, dadurch gekennzeichnet, daß der die Blendschutzwand bildende Teilabschnitt (3, 3', 3'') aus einem flexiblen flächigen Bahnmaterial ausgeführt ist, und daß mindestens ein weiterer Teilabschnitt (4, 4', 4'') aus einem elastisch dehnbaren Material ausgeführt ist, so daß die Teilabschnitte einen geschlossenen Ring einstellbarer Größe bilden.

2. Blendschutzvorrichtung nach Anspruch 1, dadurch gekennzeichnet, daß sie einen ersten und einen zweiten Halbteil (1, 2) aufweist, wobei jeder der Halbteile einen die Blendschutzwand bildenden Teilabschnitt (3', 3'') aufweist, und einen weiteren elastischen Teilabschnitt (4', 4'').

3. Blendschutzvorrichtung nach Anspruch 2, dadurch gekennzeichnet, daß eine obere Schließvorrichtung (5) zwischen einem Teilabschnitt (3') des ersten Halbteils (1) und einem Teilabschnitt (3'') des zweiten Halbteils (2) angeordnet ist, wobei die obere Schließvorrichtung (5) verstellbar ausgebildet ist.

4. Blendschutzvorrichtung nach Anspruch 2 oder 3, dadurch gekennzeichnet, daß eine untere Schließvorrichtung (6) zwischen einem Teilabschnitt (4') des ersten Halbteils (1) und einem Teilabschnitt (4'') des zweiten Halbteils (2) angeordnet ist, wobei die untere Schließvorrichtung (6) verstellbar ausgebildet ist.

5. Blendschutzvorrichtung nach Anspruch 3 oder 4, dadurch gekennzeichnet, daß die obere und untere Schließvorrichtung (5, 6) jeweils als stufenlos verstellbarer Klettverschluß ausgebildet sind.

6. Blendschtzvorrichtung nach Anspruch 1-5, dadurch gekennzeichnet, daß die die Blendschutzwand bildenden Teilabschnitte (3', 3'') aus einem Material von einer derartigen Flexibilität bestehen, daß sich die die Blendschutzwand bildenden Teilabschnitte bündig um die Bildschirmecken zu legen vermögen, wobei gleichzeitig die die Blendschutzwand bildenden Teilabschnitte an der Bildschirmoberkante nicht wesentlich durchhängen.

7. Blendschutzvorrichtung nach Anspruch 6, dadurch gekennzeichnet, daß die die Blendschutzwand bildenden Teilabschnitte (3', 3'') aus Kunststoff bestehen.

8. Blendschutzvorrichtung nach Anspruch 1-7, dadurch gekennzeichnet, daß die die Blendschutzwand bildenden Teilabschnitte (3', 3'') im wesentlichen trapezförmig ausgeführt sind.

9. Blendschutzvorrichtung nach einem der vorhergehenden Ansprüche, dadurch gekennzeichnet, daß die Oberflächenbeschaffenheit der ringinneren Seite der die Blendschutzwand bildenden Teilabschnitte (3', 3'') lichtabsorbierend sind.

10. Blendschutzvorrichtung für Bildschirme, wobei die Blendschutzvorrichtung mindestens zwei Teilabschnitte (3, 3', 3'', 4, 4', 4'') umfaßt, wobei mindestens einer der Teilabschnitte (3, 3', 3'') eine Blendschutzwand bildet, dadurch gekennzeichnet, daß der die Blendschutzwand bildende Teilabschnitt (3, 3', 3'') aus einem flexiblem flächigen Bahnmaterial ausgeführt ist, und daß mindestens ein weiterer Teilabschnitt (4, 4', 4'') derart ausgeführt ist, daß die Teilabschnitte einen geschlossenen Ring einstellbarer Größe bilden.
